(19) Europäisches Patentamt
European Patent Office
Office européen des brevets

(11) **EP 2 229 609 B1**

(12) **EUROPÄISCHE PATENTSCHRIFT**

(45) Veröffentlichungstag und Bekanntmachung des Hinweises auf die Patenterteilung:
**08.08.2012 Patentblatt 2012/32**

(21) Anmeldenummer: **09700767.8**

(22) Anmeldetag: **08.01.2009**

(51) Int Cl.:
*G05B 9/03* *(2006.01)*　　　*G05B 19/042* *(2006.01)*

(86) Internationale Anmeldenummer:
**PCT/EP2009/050164**

(87) Internationale Veröffentlichungsnummer:
**WO 2009/087187 (16.07.2009 Gazette 2009/29)**

(54) **RECHNERSYSTEM ZUR AUSWERTUNG SICHERHEITSKRITISCHER SENSORGRÖSSEN**

COMPUTER SYSTEM FOR EVALUATING SAFETY CRITICAL SENSOR VARIABLES

SYSTÈME À CALCULATEUR POUR ANALYSER DES GRANDEURS D'UN CAPTEUR CRITIQUES POUR LA SÉCURITÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **08.01.2008 DE 102008003515**

(43) Veröffentlichungstag der Anmeldung:
**22.09.2010 Patentblatt 2010/38**

(73) Patentinhaber: **Leopold Kostal GmbH & Co. KG 58513 Lüdenscheid (DE)**

(72) Erfinder: **EDEL, Jan 58513 Lüdenscheid (DE)**

(74) Vertreter: **Kerkmann, Detlef Leopold Kostal GmbH & Co. KG An der Bellmerei 10 58513 Lüdenscheid (DE)**

(56) Entgegenhaltungen:
**DE-A1- 4 219 457　　DE-A1- 10 318 171**

**Beschreibung**

Die Erfindung betrifft ein Rechnersystem zur Auswertung sicherheitskritischer Sensorgrößen nach dem Oberbegriff des Anspruchs 1 oder 2.

Die IEC 61508 ist eine internationale Norm zur Schaffung von elektrischen, elektronischen und programmierbaren elektronischen Systemen, die eine Sicherheitsfunktion ausführen. Sie wird von der International Electrotechnical Commission (IEC) herausgegeben. Die IEC 61508 schreibt für den Sicherheitsintegrationslevel 3 bestimmte hardware-technische Mindestwerte, z. B. für FIT (failure in time) und SFF (safe failure fraction) vor, die in der Regel nur durch zusätzliche software-technische Maßnahmen erreicht werden können. Insbesondere der Nachweis zur Absicherung gegen Rechenfehler der CPU macht eine bedeutenden Anteil des Gesamtnachweises der Sicherheitsintegrität aus.

Bisher werden zur Absicherung gegen Rechenfehler zwei verschiedene Mikrocontroller-Chips oder zumindest zwei parallel verlaufende Rechenpfade auf einem Chip verwendet. Mitunter kommen auch invertierend verlaufende Rechenpfade, beschrieben beispielsweise in der deutschen Offenlegungsschrift DE 42 19 457 A1, zur Anwendung. Eine Zwei-Chip-Lösung macht sich im Bereich der Massenproduktion teuer bemerkbar und durch die bisherigen Lösungen auf einem Chip konnte funktionale Sicherheit nur eingeschränkt oder nur mit zusätzlicher Hardware nachgewiesen werden, da die CPU bei internen Fehlern in den parallel oder invertierend verlaufenden Rechenwegen in gleicher Weise falsch rechnet. CPU-Fehler können daher unter Umständen unentdeckt bleiben. Es fehlt der einfache Nachweis, dass die CPU nicht in beiden Rechenwegen gleich falsch gerechnet hat und für den Vergleich der Ergebnisse zwei gleiche, aber falsche Ergebnisse vorliegen oder dass im Falle von invertierenden Rechenwegen die CPU durch Fehler z. B. beide Rechenwege auslässt und direkt zwei Eingangsgrößen verglichen werden.

Ziel der Erfindung ist es, ein Rechnersystem zur Auswertung sicherheitskritischer Sensorgrößen zu schaffen, welches nachweisbar eine besonders hohe Sicherheitsintegrität der CPU erreicht, ohne auf einen separaten, aufwendigen CPU-Test angewiesen zu sein.

Diese Aufgabe wird erfindungsgemäß jeweils durch die kennzeichnenden Merkmale des Anspruchs 1 und des Anspruchs 2 gelöst.

Erfindungsgemäß ist vorgesehen, dass zu dem Rechnersystem wenigstens zwei Sensoren gehören, die bei einem zu erfassenden Systemzustand qualitativ oder zumindest quantitativ verschiedene Sensorgrößen ausgeben. Es wird vorausgesetzt, dass ein bekannter funktionaler Zusammenhang zwischen den Ausgangsgrößen beider Sensoren besteht.

Die Sensorgröße eines ersten Sensors liegt an einem Eingang eines Rechners an, welcher daraus eine Ausgangsgröße berechnet, die für praktisch nutzbare Zwecke, beispielsweise als Steuerungsgröße für ein Stellglied, zur Verfügung steht. Aus dieser Ausgangsgröße wird in einem weiteren Schritt eine Vergleichsgröße berechnet, die der erwarteten Sensorgröße des zweiten Sensors entspricht. Diese Vergleichsgröße wird von dem Rechner an einen externen Vergleicher gegeben, der die Vergleichsgröße mit der dem Rechner völlig unbekannten, tatsächlichen Sensorgröße des zweiten Sensors auf Übereinstimmung vergleicht. Ein positives Vergleichsergebnis spricht dabei für die Sicherheitsintegrität der CPU und für eine korrekt ablaufende Berechnung der Ausgangsgröße und der Vergleichsgröße. Zugleich bleibt der, aus dem Stand der Technik bekannte, Nachweis über die korrekte Funktion beteiligter Sensoren erhalten, den ein Vergleicher prinzipiell liefert.

Die der Erfindung zugrunde liegende Idee ist somit, sich qualitativ oder auch nur quantitativ verschiedener Sensoren zu bedienen, die unterschiedliche Messgrößen oder zumindest unterschiedliche Werte liefern und damit während der Verarbeitung, und zwar unabhängig vom verwendeten Algorithmus (parallel/invertierend/invers/komplementär/zurückrechnend), zu jeder Zeit stets für unterschiedliche Datenniveaus sorgen.

Zu keiner Zeit ist die CPU in der Lage, die Vergleichsgröße anders (z. B. durch Kopie der ersten Sensorgröße) anzubieten, als durch das Ergebnis einer korrekt abgelaufenen Berechnung. Zum Nachweis der CPU-Sicherheitsintegrität ist nun ein Vergleich der Vergleichsgröße und der zweiten Sensorgröße von entscheidender Bedeutung. Verglichen werden (gegebenenfalls in einem die möglichen Abweichungen wie z. B. Sensorungenauigkeiten ausgleichenden Toleranzband) die Vergleichsgröße und der dem Rechnersystem bisher unbekannte Wert einer zusätzlichen, unabhängigen Datenquelle. Dieser Wert ist durch die zweite Sensorgröße gegeben.

Da die zweite Sensorgröße nur roh, also von der CPU unberührt und absolut unverarbeitet vorliegt, liefert der Vergleich an dieser Stelle ein Ergebnis, das allein von der CPU-Integrität des Rechnersystems (Chip) abhängt. Vorausgesetzt wird hier die Fehlerfreiheit der beiden Sensoren, bzw. die ihrer eigenen CPUs, die nur durch unabhängige Maßnahmen sichergestellt und nachgewiesen werden kann.

Vorteilhafte Ausgestaltungen und Weiterbildungen der Erfindungen gehen aus den abhängigen Ansprüchen und der nachfolgenden Beschreibung eines Ausführungsbeispiels anhand der Zeichnung hervor. Es zeigen

Figuren 1 und 2    jeweils ein Ausführungsbeispiel eines erfindungsgemäßen Rechnersystems,

Figuren 3 und 4    jeweils ein Ausführungsbeispiel eines Rechnersystems, nach dem Stand der Technik,

Figur 5    ein Anwendungsbeispiel für ein Rechnersystem.

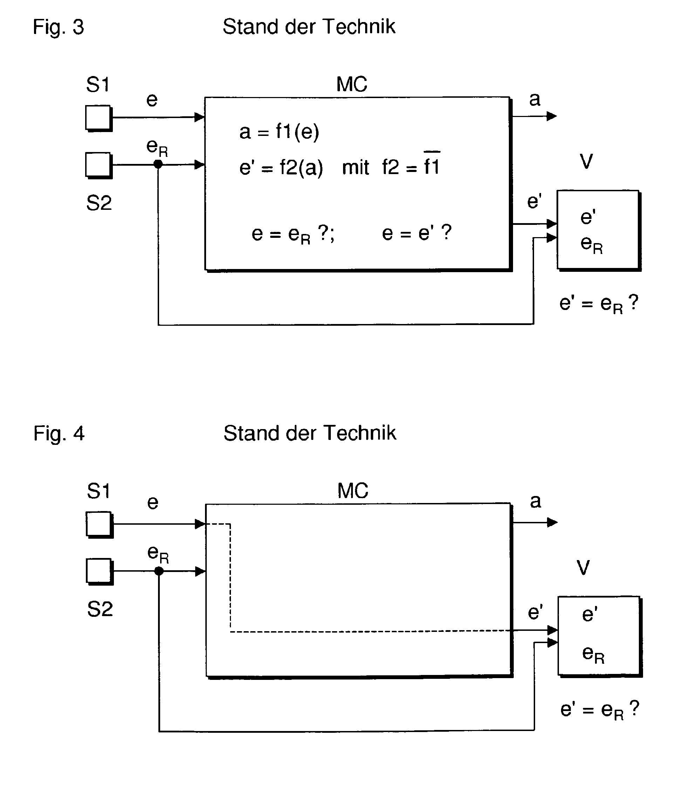

Die Figur 3 zeigt ein Rechnersystem nach dem Stand der Technik. Dargestellt ist hier eine stark vereinfachte Darstellung des in der Figur 3 der deutschen Offenlegungsschrift DE 42 19 457 A1 beschriebenen Rechnersystems. Hierbei sind nur die Komponenten dargestellt, die zur Erläuterung des zur Erfindung führenden Problems erforderlich sind.

In der Figur 3 erkennbar ist ein Ein-Chip-Rechenbaustein, also ein Mikrocomputer oder Mikrocontroller, der im folgenden kurz als Rechner MC bezeichnet wird. Der Rechner MC erhält die Sensorgrößen $(e, e_R)$ von zwei Sensoren (S1, S2) zugeführt. Die Sensorgrößen (e, eR) werden hier als digitale Werte vorausgesetzt, wobei die Sensoren (S1, S2) aber prinzipiell auch analoge Signale liefern können, die innerhalb des Rechners MC digitalisiert werden.

Aus der Sensorgröße e des ersten Sensors S1 berechnet der Rechner MC mittels einer Funktion f1 eine Ausgangsgröße a, die an einem Ausgang des Rechners MC ausgegeben wird, und beispielsweise zur Steuerung eines nichtdargestellten Stellglieds verwendet werden kann.

In einem weiteren Schritt berechnet der Rechner MC mittels einer Funktion f2 aus der Ausgangsgröße a eine Vergleichsgröße e'. Da die DE 42 19 457 A1 die Funktion f2 als die bezüglich der ersten Eingangsgröße e invertierte Funktion $\overline{f1}$ zur erste Funktion f1 beschreibt, ergibt sich, bei korrekter Funktion des Rechners MC, eine Vergleichsgröße e', die mit der ursprünglichen Eingangsgröße e des ersten Sensors S1 übereinstimmt.

Dies kann rechnerintern durch Vergleich (e = e' ?) der Größen e und e' überprüft werden. Des weiteren wird eine Überprüfung der ersten und der zweiten Sensorgröße auf Überstimmung (e = eR ?) vorgeschlagen. Es wird somit vorausgesetzt, dass die als redundant bezeichneten Sensoren (S1, S2) quantitativ gleichartige Sensorgrößen (e, eR) ausgeben.

Da ein nicht korrekt funktionierender Rechner MC prinzipiell auch falsche Vergleiche liefern kann, ist darüber hinaus ein, bezüglich des Rechners MC, externer Vergleicher V vorgesehen. Dieser Vergleicher V vergleicht die Sensorgröße $e_R$ des zweite Sensors S2 mit der berechneten Vergleichsgröße e'. Wegen der oben vorausgesetzten Identitäten (e = eR und e = e') muss auch dieser Vergleich, bei korrekt funktionierenden Sensoren (S1, S2) und einem fehlerfrei arbeitenden Rechner MC, die Identität der verglichenen Größen (e', eR) bestätigen.

Problematisch ist, dass hierbei bestimmte Fehler des Rechnersystems verborgen bleiben können. Wie die Figur 4 schematisch andeutet, ergibt sich ein Problem, wenn die erste Sensorgröße e, ohne dass eine Berechnung durchgeführt wurde, als vermeintlich berechnete Vergleichsgröße e' an den Ausgang des Rechners MC gelangt. Dies kann beispielsweise dadurch geschehen, dass die erste Sensorgröße e in ein Register des Rechners MC eingelesen wird, und aus diesem Register zu einem späteren Zeitpunkt als vermeintlich berechnete Vergleichsgröße e' ausgelesen wird und an den Ausgang des Rechners MC gegeben wird, ohne dass tatsächlich eine Berechnung mittels der Funktionen f1 und f2 stattgefunden hatte.

Da die beiden Sensorgrößen e und $e_R$ bereits eingangsseitig identisch vorgesehen sind, liefert somit der vom Vergleicher V durchgeführte Vergleich von e' und eR nun ebenfalls eine Übereinstimmung. Der Vergleicher V ist somit nicht in der Lage, den beschriebenen Rechenfehler aufzudecken.

Ein anderes Fehlerszenario ist dadurch gegeben, dass der Rechner MC sowohl bei der Berechnung der Funktion f1 als auch bei der Berechnung der Funktion f2 jeweils einen Fehler macht, und sich diese Fehler gegenseitig aufheben. Auch hier können weder rechnerinterne noch rechnerexterne Vergleiche den vorliegenden Fehler erkennen.

Als Beispiel hierfür sei ein systematisch auftretender Vorzeichenfehler genannt, der sich nach zwei fehlerhaften Rechenschritten wieder aufhebt. Dabei bleibt die durch den ersten Rechenschritt berechnete Ausgangsgröße a aber weiterhin fehlerhaft, was sich sicherheitskritisch auswirken kann.

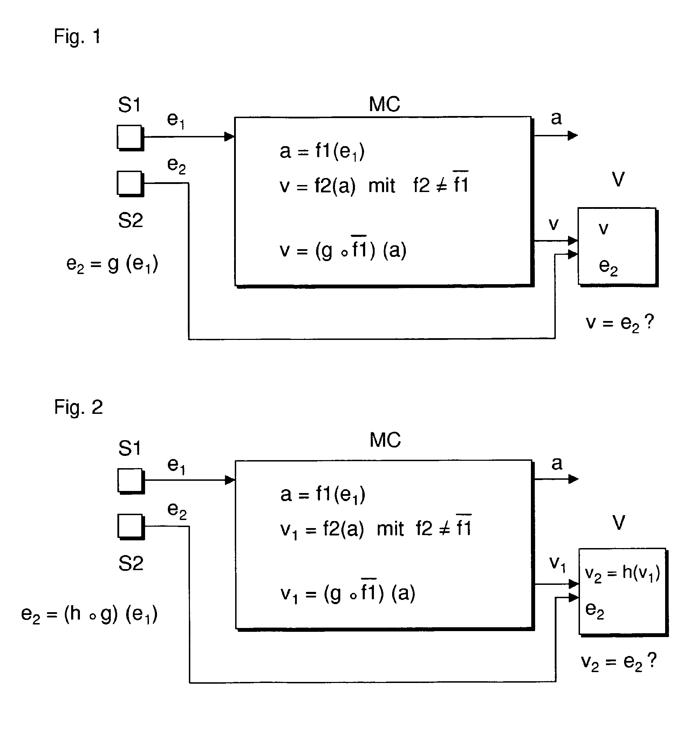

Diese Fehlermöglichkeiten werden durch das erfindungsgemäße Rechnersystem ausgeschlossen, wie nachfolgend anhand der Figur 1 erläutert werden soll. Zur Verdeutlichung der Gemeinsamkeiten und Unterschiede zum vorstehend beschriebenen Stand der Technik wurden die Bezeichnungen aus den Figuren 3 und 4 teilweise beibehalten.

Bedeutsam ist zunächst, dass die Sensoren (S1, S2) zwar redundante Sensorgrößen $(e_1, e_2)$ ausgeben, d. h. unabhängige Signale, die bezüglich des zu erfassenden Systemzustand einen gleichartigen Informationsgehalt aufweisen, deren Signalwerte aber keinesfalls identisch sind. Die Sensorgrößen $(e_1, e_2)$ der Sensoren S1 und S2 stehen in einem bekannten funktionalen Zusammenhang, der durch eine Funktion g gegeben sei. Diese Funktion g kann nahezu beliebig sein, darf aber nicht die Identitätsfunktion sein, da dies wiederum zu den bereits geschilderten Problemen führen würde.

Des weiteren ist die zweite Sensorgröße $e_2$ nur für einen externen Vergleich vorgesehen und wird daher nicht an den Rechner MC gegeben.

Eine dritte Anforderung ist, dass die Funktion f2 zur Berechnung der Vergleichsgröße v sich nicht durch die inverse Funktion zur ersten Funktion f1 ergibt, sondern den funktionalen Zusammenhang g zwischen der ersten und der zweiten Sensorgröße $(e_1, e_2)$ berücksichtigt. Die Funktion f2 ergibt sich dabei vorteilhaft als Verkettung der zu f1 inversen Funktion $\overline{f1}$ mit der Funktion g:

$$v = f2\,(a) = (g \circ \overline{f1})\,(a)$$

Bei korrekt erfolgender Berechnung stimmt der am Ausgang vorliegende Wert v mit dem zweiten Sensorwert $e_2$ überein, was durch den Vergleicher V überprüft (v = $e_2$ ?) wird.

Die zuvor beschriebenen Fehlerszenarien sind hier ausgeschlossen, da die zweite Sensorgröße $e_2$ an keiner Stelle der Berechnung als Eingabewert vorliegt und sich somit nur als Ergebnis einer korrekt abgelaufenen Berechnung ergeben kann.

Der funktionale Zusammenhang g zwischen den Sensorgrößen ($e_1$, $e_2$) der beiden Sensoren (S1, S2) kann im einfachsten Fall durch eine additive Konstante K gegeben sein:

$$e_2 = e_1 + K$$

So kann beispielsweise vorgesehen sein, dass bei Winkelsensoren der zweite Sensor S2 einen konstanten Winkelversatz gegenüber dem ersten Sensor S1 aufweist.

Alternativ kann auch vorgesehen sein, dass die zweite Sensorgröße $e_2$ ein Vielfaches k der ersten Sensorgröße $e_1$ ist:

$$e_2 = k \, e_1$$

Selbstverständlich kann auch ein weitaus komplexerer Zusammenhang zwischen den Sensorgrößen ($e_1$, $e_2$) bestehen. Insbesondere können auch zwei Sensoren vorgesehen sein, die die Sensorgrößen nach unterschiedlichen physikalischen Messprinzipien ermitteln, so dass ein mehr oder weniger komplexer Zusammenhang zwischen den Sensorgrößen ($e_1$, $e_2$) von vornherein gegeben ist.

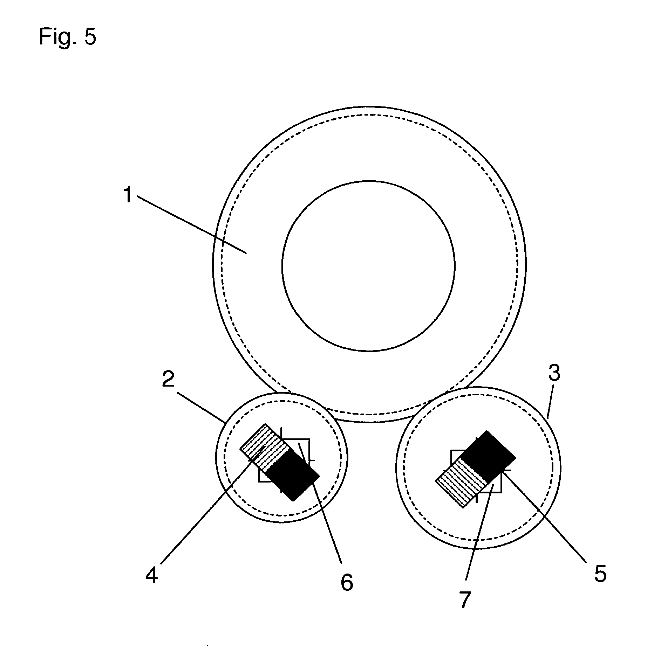

In der Figur 5 ist eine Sensorik zur Erfassung eines Drehwinkels dargestellt, bei der das vorgeschlagene Rechnersystem vorteilhaft zur Anwendung kommen kann. Ein Antriebsrad 1, dessen Drehwinkel bestimmt werden soll, treibt hier zwei Messräder (2, 3) mit unterschiedlichen Radien an. Mit jedem der Messräder (2, 3) ist ein Magnet (4, 5) verbunden, der zusammen mit dem jeweiligen Messrad (2, 3) gegenüber einem ortsfest angeordneten Hallsensor (6, 7) verdrehbar ist. Die von den beiden Hallsensoren (6, 7) erfassten Drehwinkel sind daher um einen konstanten Faktor verschieden, der sich aus den unterschiedlichen Übersetzungsverhältnissen der beiden Messräder (2, 3) zum Antriebsrad 1 ergibt.

Die Figur 2 deutet schematisch eine vorteilhafte Weiterbildung des in der Figur 1 dargestellten Rechnersystem dar. Bei dem Rechnersystem gemäß der Figur 1 wird die Sicherheitsintegrität des eigentlichen Vergleichers V am Ende der Verarbeitungskette als gegeben vorausgesetzt, bzw. ist der normgerechte Nachweis dafür separat zu erbringen.

Es wird angenommen, dass sich der funktionale Zusammenhang zwischen der ersten und der zweiten Sensorgröße ($e_1$, $e_2$) durch eine Verkettung von zwei Funktionen h und g darstellen lässt, so dass gilt:

$$e_2 = (h \circ g) \, (e_1)$$

Innerhalb des Rechners MC wird die bereits anhand der Figur 1 beschriebene Berechnung durchgeführt, die hier zu der ersten Vergleichsgröße

$$v_1 = f2(a) = (g \circ \overline{f1}) \, (a)$$

führt. Da aber der funktionale Zusammenhang zwischen der ersten und der zweiten Sensorgröße ($e_1$, $e_2$) hier nicht durch mehr g sondern durch die Verkettung h $\circ$ g gegeben ist, ist die erste Vergleichsgröße $v_1$, die an den Vergleicher V gelangt, nicht geeignet, um mit der zweiten Sensorgröße $e_2$ verglichen zu werden.

Der Vergleicher V berechnet daher mittels der Funktion h aus der ersten Vergleichsgröße $v_1$, über die Beziehung

$$v_2 = h(v_1)$$

eine zweite Vergleichsgröße $v_2$, die wegen der Zusammenhänge

$$\begin{aligned} v_2 &= h(v_1) \\ &= h \circ (g \circ \overline{f1}) \, (a) \\ &= (h \circ g) \circ \overline{f1} \, (a) \\ &= (h \circ g) \, (e_1) \\ &= e_2 \end{aligned}$$

bei einer korrekten Funktionsweise des Rechners MC und des Vergleichers V mit der zweiten Sensorgröße $e_2$ übereinstimmen muss.

Aus einem positiven Vergleichsergebnis kann somit geschlossen werden, dass sowohl der Rechner MC als auch der Vergleicher V korrekte Berechnungen durchführen. Dadurch ermöglicht diese Ausführungsvariante eine gleichzeitige Funktionsprüfung sowohl des Rechners MC, als auch der Rechenpfade des Vergleichers V.

**Bezugszeichen**

| MC | Rechner (Mikrocontroller) |
|---|---|
| S1, S2 | Sensoren |
| V | Vergleicher |

| a | Ausgangsgröße |
|---|---|
| $e, e_R, e_1, e_2$ | Sensorgrößen |
| e' | Vergleichsgröße |
| f1, f2, g, h | Funktionen |
| $\overline{f1}$ | inverse Funktion (zur Funktion f1) |
| v | Vergleichsgröße |
| $v_1$ | erste Vergleichsgröße |
| $v_2$ | zweite Vergleichsgröße |

| K | additive Konstante |
|---|---|
| k | konstanter Faktor |

| 1 | Antriebsrad |
|---|---|
| 2, 3 | Messräder |
| 4, 5 | Magnete |
| 6, 7 | Hallsensoren |

**Patentansprüche**

1. Rechnersystem zur Auswertung sicherheitskritischer Sensorgrößen, mit wenigstens einem ersten Sensor (S1), der eine erste Sensorgröße (e, $e_1$) ausgibt, und mit einem zweiten Sensor (S2), der eine zweite Sensorgröße (eR, $e_2$) ausgibt, mit einem Rechner (MC), und mit einem vom Rechner (MC) unabhängigen Vergleicher (V),
   wobei der Rechner (MC) aus der ersten Sensorgröße (e, $e_1$) mittels einer ersten Funktion (f1) eine Ausgangsgröße (a) berechnet,
   wobei der Rechner aus der Ausgangsgröße (a) mittels einer zweiten Funktion (f2) eine Vergleichsgröße (e', v, $v_1$) berechnet,
   und wobei am Eingang des Vergleichers (V) die Vergleichsgröße (e', v, $v_1$) und die zweite Sensorgröße (eR, $e_2$) anliegt,
   **dadurch gekennzeichnet,**
   **dass** die zweite Sensorgröße ($e_2$) keine Eingangsgröße des Rechners (MC) ist,
   **dass** die zweite Sensorgröße ($e_2$) und die erste Sensorgröße ($e_1$) in einem durch eine dritte Funktion (g) gegebenen Zusammenhang ($e_2 = g(e_1)$) stehen, wobei die dritte Funktion (g) nicht die Identitätsfunktion ist,
   **dass** die zweite Funktion (f2) durch eine Verkettung der dritten Funktion (g) mit der invertierten ersten Funktion ($\overline{f1}$) gegeben ist ($f2 = g \bigcirc \overline{f1}$)
   und **dass** der Vergleicher (V) die Vergleichsgröße (v) mit der zweiten Sensorgröße ($e_2$) vergleicht.

2. Rechnersystem zur Auswertung sicherheitskritischer Sensorgrößen, mit wenigstens einem ersten Sensor (S1), der eine erste Sensorgröße (e, $e_1$) ausgibt, und mit einem zweiten Sensor (S2), der eine zweite Sensorgröße ($e_R$, $e_2$) ausgibt, mit einem Rechner (MC), und mit einem vom Rechner (MC) unabhängigen Vergleicher (V),
   wobei der Rechner (MC) aus der ersten Sensorgröße (e, $e_1$) mittels einer ersten Funktion (f1) eine Ausgangsgröße (a) berechnet,
   wobei der Rechner aus der Ausgangsgröße (a) mittels einer zweiten Funktion (f2) eine Vergleichsgröße (e', v, $v_1$) berechnet,
   und wobei am Eingang des Vergleichers (V) die Vergleichsgröße (e', v, $v_1$) und die zweite Sensorgröße ($e_R$, $e_2$) anliegt,
   **dadurch gekennzeichnet,**
   **dass** die zweite Sensorgröße ($e_2$) keine Eingangsgröße des Rechners (MC) ist,
   **dass** sich der Zusammenhang zwischen der zweiten Sensorgröße ($e_2$) und die erste Sensorgröße ($e_1$) durch zwei miteinander verkettete Funktionen (h $\bigcirc$ g) darstellen lässt, wobei keine der miteinander verketteten Funktionen (h, g) und auch nicht der durch die Verkettung darstellte Zusammenhang (h $\bigcirc$ g) zwischen den Sensorgrößen ($e_1, e_2$) durch die Identitätsfunktion gegeben ist,
   **dass** der Rechner (MC) eine der verketteten Funktionen (g) zur Berechnung einer ersten Vergleichsgröße ($v_1$) verwendet,
   und **dass** der Vergleicher (V) aus der ersten Vergleichsgröße ($v_1$) mittels der anderen der miteinander verketteten Funktionen (h) eine zweite Vergleichsgröße ($v_2$) berechnet, und zum Vergleich mit der zweiten Sensorgröße ($e_2$) verwendet.

3. Rechnersystem nach Anspruch 1, **dadurch gekennzeichnet, dass** die zweite Sensorgröße ($e_2$) sich von der ersten Sensorgröße ($e_1$) durch eine additive Konstante (K) unterscheidet.

4. Rechnersystem nach Anspruch 1, **dadurch gekennzeichnet, dass** die zweite Sensorgröße ($e_2$) sich von der ersten Sensorgröße ($e_1$) durch einen konstanten Faktor (k) unterscheidet.

5. Rechnersystem nach Anspruch 1, **dadurch gekennzeichnet, dass** der ersten Sensor (S1) und der zweiten Sensor (S2) unterschiedliche physikalische Größen erfassen.

**Claims**

1. Computer system for analysing safety-critical sensor variables having at least one first sensor (S1) which outputs a first sensor variable (e, $e_1$) and having a second sensor (S2) which outputs a second sensor

variable ($e_R$, $e_2$); having a computer (MC) and having a comparator (V) which is independent of the computer (MC),

whereby the computer (MC) calculates an output variable (a) from the first sensor variable (e, $e_1$) by means of a first function (f1);

whereby the computer calculates a comparative variable (e', v, $v_1$) from the output variable (a) by means of a second function (f2),

and whereby the comparative variable (e', v, $v_1$) and the second sensor variable ($e_R$, $e_2$) are applied to the input of the comparator (V),

**characterised in that**

the second sensor variable ($e_2$) is not an input variable of the computer (MC);

that the second sensor variable ($e_2$) and the first sensor variable ($e_1$) are in an association ($e_2 = g(e_1)$) provided by a third function (g), for which purpose the third function (g) is not the identity function;

that the second function (f2) is given by way of linking the third function (g) to the inverted first function ($\overline{f1}$) ($f2 = g \bigcirc \overline{f1}$);

and that the comparator (V) compares the comparative variable (v) with the second sensor variable (e2).

2. Computer system for analysing safety-critical sensor variables, having at least one first sensor (S1) which outputs a first sensor variable (e, $e_1$) and having a second sensor (S2) which outputs a second sensor variable ($e_R$, $e_2$); having a computer (MC) and having a comparator (V) which is independent of the computer (MC),

whereby the computer (MC) calculates an output variable (a) from the first sensor variable (e, $e_1$) by means of a first function (f1);

whereby the computer calculates a comparative variable (e', v, $v_1$) from the output variable (a) by means of a second function (f2),

and whereby the comparative variable (e', v, $v_1$) and the second sensor variable ($e_R$, $e_2$) are applied to the input of the comparator (V),

**characterised in that**

the second sensor variable ($e_2$) is not an input variable of the computer (MC);

that the association between the second sensor variable ($e_2$) and the first sensor variable ($e_1$) can be represented by two interlinked functions (h $\bigcirc$ g), for which purpose neither of the interlinked functions (h, g) nor the association (h o g) between the sensor variables ($e_1$, $e_2$) represented by the interlink is provided by the identification function;

that the computer (MC) implements one of the linked functions (g) for calculating a first comparative variable ($v_1$);

and that the comparator (V) calculates a second comparative variable ($v_2$) from the first comparative variable ($v_1$) by means of the others of the interlinked functions (h) and applies this for the comparison with the second sensor variable ($e_2$).

3. Computer system according to Claim 1, **characterised in that** the second sensor variable ($e_2$) differs from the first sensor variable ($e_1$) by way of an additive constant (K).

4. Computer system according to Claim 1, **characterised in that** the second sensor variable ($e_2$) differs from the first sensor variable ($e_1$) by way of a constant factor (k).

5. Computer system according to Claim 1, **characterised in that** the first sensor (S1) and the second sensor (S2) capture different physical variables.

## Revendications

1. Système informatique pour l'exploitation de grandeurs critiques au point de vue sécurité, avec au moins un premier détecteur (S1), qui délivre une première grandeur (e, $e_1$), et un deuxième détecteur (S2), qui délivre une deuxième grandeur ($e_R$, $e_2$), avec un calculateur (MC) et avec un comparateur (V), qui est indépendant du calculateur (MC),

sachant que le calculateur (MC) calcule, à partir de la première grandeur (e, $e_1$), une grandeur de sortie (a), au moyen d'une première fonction (f1).

le calculateur calculant, à partir de la grandeur de sortie (a), une grandeur de comparaison (e', v, $v_1$), au moyen d'une deuxième fonction (f2),

et sachant que la grandeur de comparaison (e', v, $v_1$) et la deuxième grandeur ($e_R$, $e_2$) sont présentées à l'entrée du comparateur (V),

**caractérisé en ce que**

la deuxième grandeur ($e_2$) n'est pas une grandeur d'entrée du calculateur (MC),

que la deuxième grandeur ($e_2$) et la première grandeur ($e_1$) sont dans une relation ($e_2 = g(e_1)$), qui est donnée par une troisième fonction (g), sachant que la troisième fonction (g) n'est pas la fonction d'identité,

que la deuxième fonction (f2) est donnée par une concaténation de la troisième fonction (g) et de la première fonction inversée ($\overline{f1}$) ($f2 = g \bigcirc \overline{f1}$), et que le comparateur (V) compare la grandeur de comparaison (v) avec la deuxième grandeur ($e_2$).

2. Système informatique pour l'exploitation de grandeurs critiques au point de vue sécurité, avec au moins un premier détecteur (S1), qui délivre une première grandeur (e, $e_1$), et un deuxième détecteur (S2), qui délivre une deuxième grandeur ($e_R$, $e_2$), avec un calculateur (MC) et avec un comparateur (V), qui est indépendant du calculateur (MC),

sachant que le calculateur (MC) calcule, à partir de la première grandeur ($e$, $e_1$), une grandeur de sortie ($a$), au moyen d'une première fonction ($f1$).

le calculateur calculant, à partir de la grandeur de sortie ($a$), une grandeur de comparaison ($e'$, $v$, $v_1$), au moyen d'une deuxième fonction ($f2$),

et sachant que la grandeur de comparaison ($e'$, $v$, $v_1$) et la deuxième grandeur ($e_R$, $e_2$) sont présentées à l'entrée du comparateur (V),

**caractérisé en ce que**

la deuxième grandeur ($e_2$) n'est pas une grandeur d'entrée du calculateur (MC),

que le rapport entre la deuxième grandeur ($e_2$) et la première grandeur ($e_1$) peut être représenté par deux fonctions concaténées ($h \circ g$), sachant qu'aucune des fonctions concaténées ensemble ($h$, $g$) ni également le rapport ($h \circ g$) entre les grandeurs ($e_1$, $e_2$), représenté par la concaténation, ne sont donnés par la fonction d'identité,

que le calculateur (MC) utilise l'une des fonctions concaténées ($g$) pour le calcul d'une première grandeur de comparaison ($v_1$),

et que le comparateur (V) calcule, à partir de la première grandeur de comparaison ($v_1$), une deuxième grandeur de comparaison ($v_2$), au moyen de l'autre des fonctions concaténées ($h$) et l'utilise pour la comparaison avec la deuxième grandeur ($e_2$).

3. Système informatique selon la revendication 1, **caractérisé en ce que** la deuxième grandeur ($e_2$) se distingue de la première grandeur ($e_1$) par une constante additive (K).

4. Système informatique selon la revendication 1, **caractérisé en ce que** la deuxième grandeur ($e_2$) se distingue de la première grandeur ($e_1$) par un facteur constant (k).

5. Système informatique selon la revendication 1, **caractérisé en ce que** le premier détecteur (S1) et le deuxième détecteur (S2) détectent des grandeurs physiques différentes.

Fig. 1

Fig. 2

Fig. 3 Stand der Technik

$a = f1(e)$

$e' = f2(a)$ mit $f2 = \overline{f1}$

$e = e_R$ ?; $e = e'$ ?

$e' = e_R$ ?

Fig. 4 Stand der Technik

$e' = e_R$ ?

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4219457 A1